# EUROPEAN PATENT SPECIFICATION

(11) **EP 0 498 427 B1**
(45) Date of publication and mention of the grant of the patent: **23.08.1995**
(21) Application number: 92101998.0
(22) Date of filing: 06.02.1992
(51) Int. Cl.: C08L 67/02, C08K 5/09, C08K 3/00

(54) **Fast-crystallising polyester moulding compositions**
Schnell kristallisierende Polyesterformmassen
Compositions à mouler de polyester cristallisant rapidement

(30) Priority: 06.02.1991 IT MI910305
(43) Date of publication of application: 12.08.1992
(73) Proprietor: ENICHEM S.p.A., 20124 Milano (IT)
(72) Inventor: Riccardi, Nunzio, I-75100 Matera (IT); De Mattia, Nicola, I-75100 Matera (IT); Mariano, Armando, Dr., I-75100 Matera (IT); Ciaperoni, Aldemaro, Dr., I-20021 Bollate, Milan (IT)
(74) Representative: Weinhold, Peter, Dr.

(56) References cited:
- EP-A- 0 371 753
- GB-A- 2 075 031
- US-A- 4 429 067
- US-A- 4 810 744
- WORLD PATENTS INDEX LATEST Derwent Publications Ltd., London, GB; AN 90-181503 & JP-A-2 117 951

## Description

The present invention relates to molding compositions based on polyester.

More particularly, the present invention relates to molding compositions which are based on polyester, optionally reinforced, are endowed with high rates of crystallization and are particularly suitable for being molded at low mold temperatures to result in molded articles having an optimum combination of mechanical, physical and thermal properties and of surface appearance.

Saturated linear thermoplastic polyesters, such as polyethylene-terephthalate (PET), its blends and copolymers, are well known and produced on a large scale at comparatively low costs. In their crystalline state they show excellent physical and mechanical properties, consistent with their high melting points.

In order to improve the mechanical properties of the molded articles obtained from said thermoplastic polyesters, reinforcing materials such as, for example, glass fibers, asbestos fibers, carbon fibers, crystalline aromatic polyamide fibers, and/or high modulus acrylic fibers are conventionally added thereto.

The commercial development of these saturated linear polyesters as molding material for use in injection molding technology has been, however, hampered by the required cycle times for the molding of finished articles which is longer than that necessary for other engineering polymers.

This is mainly due to the fact that molded articles based on polyester do not reach the crystalline state as rapidly as this is the case with molded articles obtained from other engineering polymers. On the other hand, the premature ejection from the mold of an article which has not been sufficiently crystallized would result in a further crystallization afterwards, thereby causing a change in the volume and a possible distortion of the shape of the article.

A further disadvantage of PET, either as such or reinforced, is that it requires the molds to be maintained at a temperature higher than 100°C in order to obtain molded articles having dimensional stability and a good surface appearance.

In fact, the crystallization rate of PET at a temperature lower than 100°C is so low that it is not possible to obtain satisfactory molded articles under said condition.

While good surface characteristics can be obtained with molding temperatures of 130°C or more, the use of such high temperatures is not practical in the molding field since most molds are heated with water and can only reach temperatures not higher than 100°C.

There are known additives, generally called nucleating agents, which allow to suitably increase the melt crystallization rate of the polyesters; however, these known additives influence the lower limit of the mold temperature only slightly.

Said limit, in fact, is correlated to both the peak of crystallization during the heating (Tch) and the peak of crystallization during the cooling (Tcc), both peaks being determined by differential scanning calorimetry. Said peaks, for unmodified PET, have their maximum at 135°C and 208°C, respectively, while in the presence of nucleating agents of the salt type, such as sodium benzoate, sodium o-chloro-benzoate and the like, these temperatures are slightly changed to 130°C and 212°C, respectively.

PET compositions containing the above nucleating agents are disclosed, for example, in US-A-3,516,957; JP-B-71/029977 and 69/24349; DE-A-20 14 770; 19 45 967 and 19 45 101; and GB-A-1,282,679, 1,315,695 and 2 075 031.

Substantially the same results are also achieved by adding copolymers of an alpha-olefin and an ethylenically unsaturated carboxylic acid wherein the acid groups can be completely or partially neutralized with metal cations to the PET, as disclosed in US-A-3,435,093 and 3,639,527, FR-A-2,051,638 and GB-A-2 075 031.

It is known that in order to drastically influence the maximum crystallization temperatures (Tch) and (Tcc) of PET as well as the glass transition temperature (Tg) of the amorphous phase, it is generally necessary to use plasticizers and/or comonomers, also polymeric, which are capable of rendering the polymeric macromolecule more flexible.

The patent literature contains numerous examples of documents which describe the addition of conventional plasticizers, alone or in admixture with a nucleating agent, to PET or, generally, to a saturated polyester. Generally, the plasticizing agent is a low molecular weight ester, such as neo-pentyl glycol dibenzoate, diethylene glycol dibenzoate, triethylene glycol dibenzoate, glyceryl tribenzoate and the like or a polyalkylene glycol.

PET compositions containing the above plasticizers are disclosed, for example, in US-A-4,440,889 and 4,344,874 and in JP-B-83/049747.

The addition of a combination of nucleating agent and plasticizer to PET is described in many documents, among others in JP-A-84/157144 (compositions of PET, Na-stearate and polyethylene glycol lauryl glycidyl ether); JP-A-84/24747 (compositions of PET and an ethylene-methacrylic acid copolymer salified with Na in combination with polyethylene glycol dimethyl ether); JP-A-57/143384 (compositions of PET and polyethylene glycol diphthalate disodium salt); US-A-4,365,036 (use of complex of NaI and polyethylene glycol as modifier of PET); and US-A-4,558,085 (use of a complex of polyethylene glycol and sodium salts of aliphatic acids).

Particularly, US-A-4,352,904 discloses a reinforced PET containing incorporated therein a sodium or potassium salt of an aliphatic carboxylic acid containing 7 to 25 carbon atoms, or a sodium or potassium salt of an organic polymer which contains pendant carboxyl groups and a low molecular weight organic compound which can be an ester, a ketone, a sulfone, a sulfoxide, a nitrile or an amide.

The presence, however, of a plasticizing agent and/or of an agent making the PET chain flexible involves some change in its peculiar properties such as the melting temperature, the thermal stability and, generally, the mechanical properties of the corresponding molded articles; this change is the more noticeable the higher the amount of added plasticizing agent is.

One object of the present invention is to provide a composition based on a preferably saturated and linear thermoplastic polyester with high crystallization rate and being suitable for molding at mold temperatures not higher than 100°C which results in molded articles having an optimum combination of mechanical, physical and thermal properties and of surface appearance.

The composition of the present invention allows to achieve the above mentioned characteristics by incorporating in the polyester resin (A): at least one salt of at least one mono- and/or polycarboxylic acid (B); an ionomer copolymer containing pendant carboxylic groups at least 10% of which are salified (C); and a solid inert inorganic substance (D) having an (average) particle size not higher than 5 »m.

The polyester compositions of the present invention preferably comprise a linear saturated polyester (A); from 0.1 to 5, and preferably from 0.5 to 2% by weight, with respect to polyester (A), of at least one salt of at least one mono- and/or polycarboxylic acid preferably containing 7 to 25 carbon atoms; from 1 to 20, and preferably from 2 to 10% by weight, with respect to polyester (A), of the above component (C); and from 0.01 to 1, and preferably from 0.05 to 0.5% by weight, with respect to polyester (A), of a solid inert inorganic substance (D) having an average particle size not higher than 5 »m and preferably not higher than 2.5 »m.

Most preferably, the above polyester (A) comprises a linear saturated polyester having an intrinsic viscosity of at least 0.3 dl/g and particularly of from 0.5 to 1.1 dl/g.

Tests carried out by the applicant have shown that the effect of the combination of the above components (B), (C) and (D) is much greater than the additive effect of the individual components, as far as the crystallization rate and the decrease of the peaks of crystallization temperature on heating (Tch) and on cooling (Tcc) are concerned. Furthermore, the compositions of the present invention can be molded by using conventional molds heated with water at temperatures preferably ranging from 50 to 85°C and allow to obtain molded articles having an optimum combination of mechanical, physical and thermal properties and of surface appearance.

In addition, the polyester compositions of the present invention can also contain reinforcing material, such as glass fibers, asbestos fibers, carbon fibers, crystalline aromatic polyamide fibers (such as, for example, Kevlar®), high modulus acrylic fibers and mixtures thereof. In this case, the concentration of the reinforcing material usually ranges from 0.1 to 150, preferably from 10 to 100% by weight, with respect to the composition. Glass fibers, particularly those having a length of from 0.05 to 5 cm and/or a diameter of from 5 to 50 »m, are preferred reinforcing materials.

The preferably linear and saturated polyester (A) contained in the compositions of the present invention may generally be any of the linear saturated products obtainable by polycondensation of a saturated aliphatic and/or cycloaliphatic glycol with a dicarboxylic acid or one of its reactive derivatives. Preferably, said polyester comprises the polycondensation products of at least one aromatic dicarboxylic acid having from 8 to 14 carbon atoms and at least one glycol selected from those of formula HO-(CH₂)ₙ-OH, wherein n is an integer of from 2 to 10 (e.g. 2 to 6), neopentyl glycol and cyclohexane dimethanol.

Up to 50% by moles of the aromatic dicarboxylic acid can be substituted by at least one other different aromatic dicarboxylic acid having from 8 to 14 carbon atoms, and/or up to 20% by moles of the aromatic dicarboxylic acid(s) can be substituted by an aliphatic dicarboxylic acid preferably having from 2 to 12 carbon atoms.

The preparation methods of these polyesters are well known and described, for example, in US-A-2,465,319 and 3,047,539.

Specific examples of suitable aromatic dicarboxylic acids are terephthalic acid, isophthalic acid, dibenzoic acid, naphthalene-dicarboxylic acids, including the naphthalene 1,5-, 2,6-and 2,7-dicarboxylic acids, 4,4'-diphenylene-dicarboxylic acid, ethylene-bis-p-benzoic acid and the like.

Specific examples of suitable glycols are ethylene glycol, diethylene glycol, 1,3-trimethylene glycol, 1,4-tetramethylene glycol, 1,6-hexamethylene glycol, 1,8-octamethylene glycol, 2,2-dimethyl-1,3-propane diol and cyclohexane dimethanol. The acids and glycols can be employed alone or in combination of two or more thereof.

Specific examples of aliphatic dicarboxylic acids to be optionally used in combination with the above aromatic acids are adipic acid, glutaric acid, sebacic acid, azelaic acid, dodecandioic acid and 1,4-cyclohexane-dicarboxylic acid.

Polyethylene terephthalate of an intrinsic viscosity of at least 0.3 dl/g and, preferably, from 0.5 to 1.1 dl/g which contains at least 0.5% by weight and preferably from 0.8 to 5% by weight of diethylene glycol is particularly preferred for use in the compositions of the present invention.

The intrinsic viscosity is measured at 25°C in a solution containing 8 grams of polymer in 100 ml of ortho-chlorophenol, according to ASTM D 2857.

Component (B) of the compositions of the present invention is a salt of a mono- and/or polycarboxylic acid preferably containing from 7 to 25 carbon atoms. These salts are preferably those of the metals of Groups I and II of the Periodic Table. Specific examples of suitable mono- and polycarboxylic acids include caprylic acid, lauric acid, myristic acid, stearic acid, benzoic acid, terephthalic acid, isophthalic acid, 1,8-naphthalene dicarboxylic acid and the like. Generally, the sodium, potassium, lithium and calcium salts of these acids or combinations thereof are used.

The use of sodium and/or potassium benzoate is particularly preferred.

The above salts are preferably used in pulverized form with an average particle size of below 10 »m, particularly of from 1 to 5 »m.

Some PET compositions containing the above mentioned salts are described in JP-B-71/29977 and in DE-A-20 14 770.

The ionomer copolymer containing pendant carboxylic groups at least 10% of which are salified, i.e., component (C) of the composition of the present invention, can be a copolymer of at least one alpha-olefin and at least one alpha-beta unsaturated carboxylic acid (monocarboxylic and/or polycarboxylic, e.g., dicarboxylic, acid) wherein at least 10% of the carboxy groups are neutralized with at least one metal belonging to Groups I to III of the Periodic Table.

These copolymers may be prepared according to the process described, for example, in CA-A-674,595.

Examples of suitable ionomer copolymers (C) are those of general formula (I) 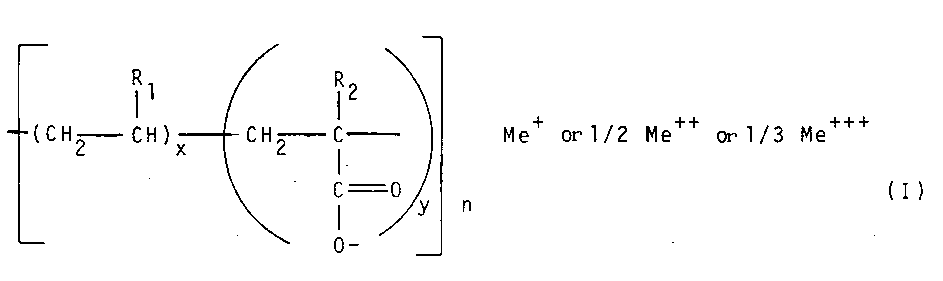
wherein:
R₁ represents hydrogen, C₁-C₁₂ (and preferably C₁-C₆) alkyl or phenyl; R₂ represents hydrogen, methyl or ethyl; x, y and n are each integers; Me⁺ represents a metal ion of Group I, Me⁺⁺ a metal ion of Group II and Me⁺⁺⁺ a metal ion of Group III of the Periodic Table.

Polyester compositions containing these ionomer copolymers are described, for example, in US-A-3,435,093 and 3,639,527.

Examples of copolymers having general formula (I) comprise those copolymers wherein the alpha-olefin is ethylene, propylene, butene-1 and/or pentene-1 and the alpha-beta unsaturated (di)carboxylic acid is selected from acrylic acid, itaconic acid, maleic acid, fumaric acid and the corresponding alkyl esters. Other comonomers can, of course, also be present in the copolymers of formula (I).

The carboxylic groups are usually distributed at random in the copolymer and their quantity is, preferably, relatively small. In fact, the preferred ionomer copolymers are those having an olefin content of at least 50, and preferably from 80 to 99% by weight.

The carboxy groups of the above ionomer copolymers need not always be all neutralized by the metal ions, but at least 10% and preferably at least 30% of the carboxyl groups are neutralized by metal ions belonging to Groups I to III of the Periodic Table. The neutralization of the pendant carboxy groups can also be complete.

The preferred metal ions are those of sodium, potassium, lithium, calcium, magnesium zinc, barium and aluminium; sodium and potassium ions are most preferred.

The molecular weight of the ionomer copolymer is not critical and, generally, ranges from 5,000 to 50,000.

An ionomer copolymer particularly preferred in the compositions of the present invention is the copolymer of ethylene and methacrylic acid in a ratio of about 85:15, wherein from 50 to 85% of the carboxy groups are neutralized by sodium or potassium ions. This copolymer is available on the market and is produced and sold by E.I. Du Pont de Nemours Company under the trade name SURLYN®.

The ionomer polymer (C) may also be produced by grafting an alpha-beta unsaturated acid onto a polymeric chain of one or more alpha-olefins.

Specific examples of the inert inorganic substance (D) of the composition of the present invention are calcium carbonate, talc, calcium sulphate, magnesium oxide, titanium dioxide, carbon black, pyrophyllite, boron nitride and mixtures thereof. Talc is particularly preferred.

In addition to the above components (B), (C) and (D) the compositions of the present invention may contain conventional additives commonly employed with polyester resins to improve the photo- and/or thermostability characteristics thereof and/or other additives such as pigments, colorants, mold release agents, flame retarding agents, rubbers to impart impact resistant properties, additives which improve physical properties, such as toughness and elongation and so on, preferably in amounts of from 0.01 to 5% by weight and particularly 0.1 to 5% by weight.

The compositions of the present invention can be prepared by blending the components by any conventional means. Neither temperature nor pressure are critical for the preparation of these compositions. For example, the linear saturated polyester (A) can be dry mixed in any suitable blender or tumbler with components (B), (C) and (D); the mixture thus obtained may then be melt-extruded. The extrudate can be chopped and mixed with the reinforcing agent and then the mixture obtained may again be melt-extruded. More conveniently, all of the components of the composition, including the reinforcing agent, may be mixed in any suitable blender or tumbler at room temperature and the resulting mixture may then be melt-extruded.

For the extrusion, any known extrusion device such as single-screw or double-screw extruders, Banbury blenders, mixing rolls and the like can be employed, usually at a temperature of from 250 to 300°C.

The above components (B), (C) and (D) may also be added to the polyester (A) before or during the polymerization process thereof.

With this method, it is advisable to carry out the polymerization in a suitable way, especially during the polycondensation phase, in the melt state.

The individual components (B), (C) and (D) may also be added separately to the polyester at different steps of the preparation of the compositions of the present invention.

The compositions of the present invention are useful for the manufacture of various molded articles, e.g., by injection or extrusion molding technologies, and are particularly useful for the manufacture of automative parts, parts for electric devices and the like.

The following examples are to further illustrate the present invention without limiting the scope thereof.

### EXAMPLES 1 - 12

In all examples the following procedure was employed for preparing the compositions:
Polyethylene terephthalate (PET) having an intrinsic viscosity of 0.65 dl/g (measured at 25°C in a solution containing 8 g of the polymer in 100 ml of ortho-chlorophenol, according to ASTM D 2857) and a content of copolymerized diethylene glycol of 2.2% by weight, was previously dried for 12 hours under vacuum at 140°C in order to reduce the residual water content to about 150 ppm. The PET was mixed, in a dry blender, with the components and in the amounts listed in Table I below.

The obtained mixtures were then extruded by means of a double-screw extruder (ZCM 41/46 of Soc. AUTOMATIC) provided with screws having a variable diameter of 41 and 46 mm; the temperature of the melt was 270°C.

Glass fibers having a diameter of 10 »m and a length of 4.25 mm were added to the terminal portion of the extruder for the production of reinforced compositions.

The extrudate in the form of strands was cooled in water and cut into granules which were then dried at 140°C for about 12 hours and molded by a melt polymer injection molder (BMB 65 MC) at a temperature of about 275°C. The molding cycle was 42 seconds. The mold temperature (water cooled) is listed in Table I.

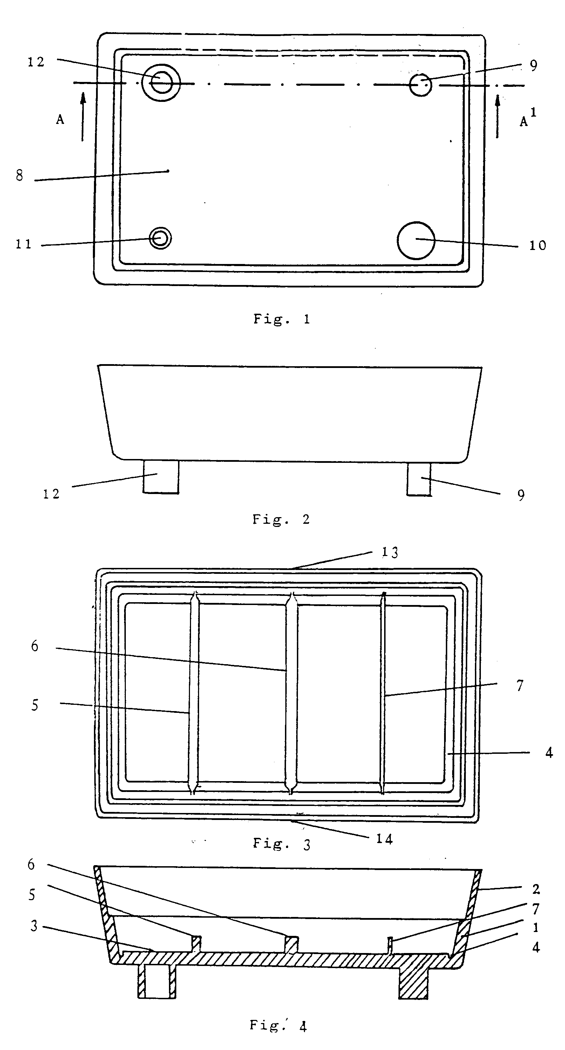

Trapezoidal boxes having a rectangular bottom, as illustrated in Figs. 1, 2, 3 and 4 of the enclosed drawing, were molded.

In the drawing:
- Fig. 1: represents the schematical view from the bottom of the box;
- Fig. 2: represents the side schematical view of the box;
- Fig. 3: represents the schematical view from the upper part of the box;
- Fig. 4: represents the schematical view of the cross-section obtained by a plane passing through the line A - A' of Fig. 1.

The dimensions of the box were:
Height: 40 mm

| Dimensions of the bottom: | |
|---|---|
| . length: | 105 mm |
| . width: | 62 mm |
| . thickness: | 3 mm |

| Dimensions of the upper part: | |
|---|---|
| . width: | 80.5 mm |
| . length: | 120 mm |

The side walls were composed of a lower part (1), in contact with the bottom, having a height of 15 mm and a thickness of 2 mm and of an upper part (2) having a height of 15 mm and a thickness of 1 mm.

The inner surface (3) of the bottom of the box was provided with a perimetric groove (4), having a depth of 1 mm and a width of 1 mm, and with three ribs (5, 6, 7) having a thickness of 2 mm, 3 mm and 1 mm, respectively, an identical height of 5 mm and a length of 62 mm.

One of the three ribs (6) was arranged in the central part of the bottom and the other two ribs (5 and 7) were in symmetrical positions at a distance of 30 mm from the central rib (6).

The external surface (8) of the bottom of the box was provided, at the four corners, with feet (9, 10, 11, 12) having a circular cross-section and all the same height of 10 mm.

One of the feet (9) was solid and had a diameter of 6 mm; the second foot (10) was solid and had a diameter of 10 mm; the third foot (11) was tubular with an external diameter of 6 mm and an inner diameter of 4 mm, and, finally, the fourth foot (12) was tubular with an external diameter of 10 mm and an inner diameter of 6 mm.

For evaluating the characteristics of the compositions the following methods were used.

### Evaluation of the crystallization index

Thermal analyses were carried out on a rectangular small sample having a thickness of 1.6 mm by a Mod. 9900 E.I. Du Pont de Nemours differential scanning calorimeter.

The crystallization heat on heating (ΔHch), with its peak temperature (Tch), and, when in the melt state, the crystalization heat on cooling from the melt state (ΔHcc) with its maximum temperature (Tcc) were determined.

The crystallization index was calculated according to the formula:

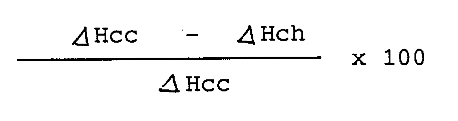

### Mechanical properties

The tensile strength and the elongation at break according to ASTM D 638; the elastic modulus according to ASTM D 790 and the IZOD notched impact strength at 23°C according to ASTM D 256 were determined, on test pieces having a thickness of 3.2 mm.

### Thermal properties

The heat distortion temperature (HDT) was determined according to ASTM D 648.

### Box distortion

The box distortion was determined by measuring the distance (F), expressed in mm, between two median opposite points (13, 14) of the upper part of the longer walls and by using the formula:

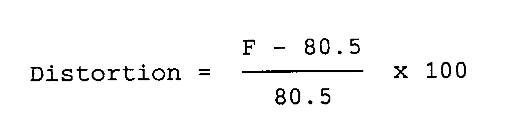

Surface appearance of the molded boxes was determined by measuring the gloss, at an angle of 60°, on a rectangular plate having sires (125 x 125 x 3.2 mm) by using a reflektometer R B 60° (DR. LANGE - Berlin) according to ASTM 2457.

The characteristics of the compositions are listed in the following Table I.

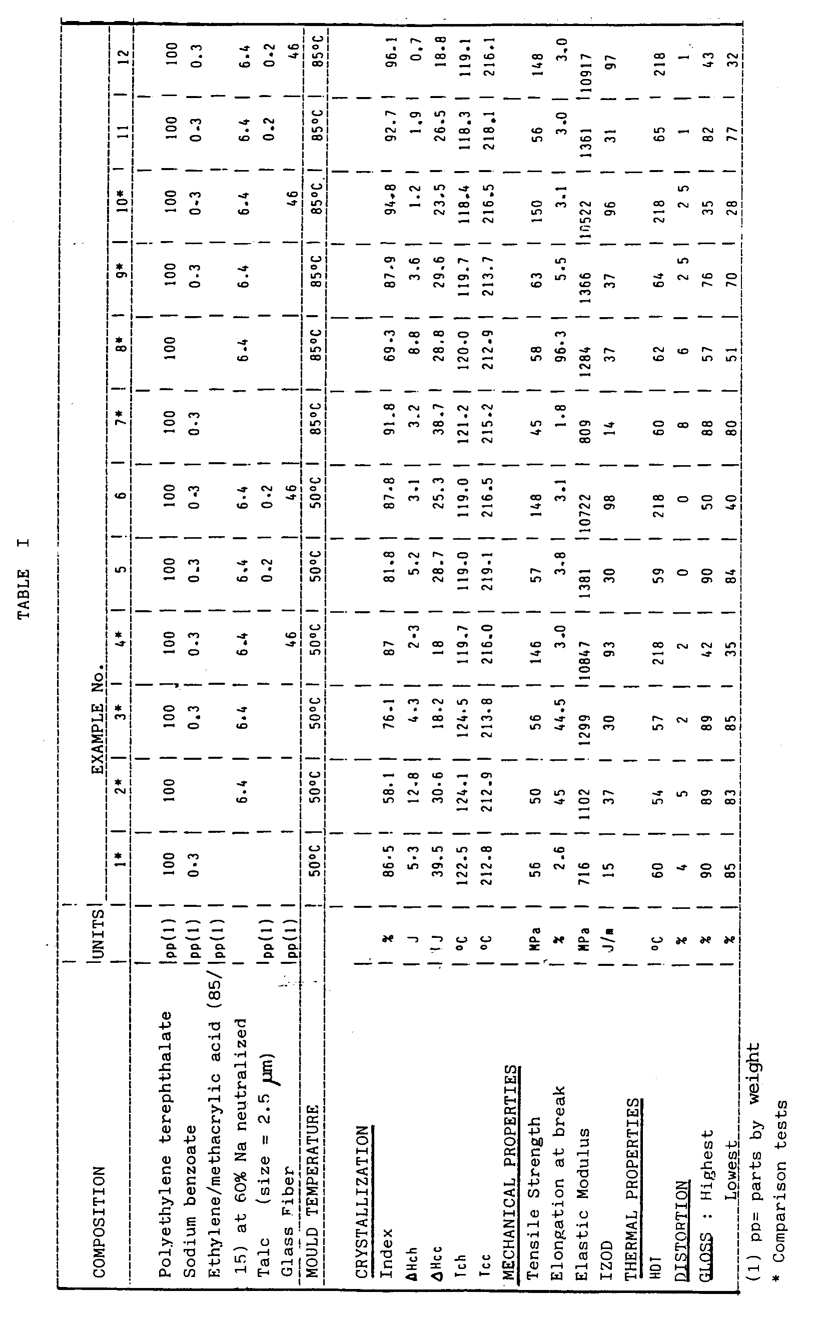

### EXAMPLES 13 - 18

The operative modalities of example 1 were repeated, using polyethylene terephthalate having an intrinsic viscosity of 0.65 dl/g, measured as described in example 1, a water content of about 150 ppm and containing 0.9% by weight of diethylene glycol copolymerized therein.

The characteristics of the obtained compositions are listed in the following Table II.

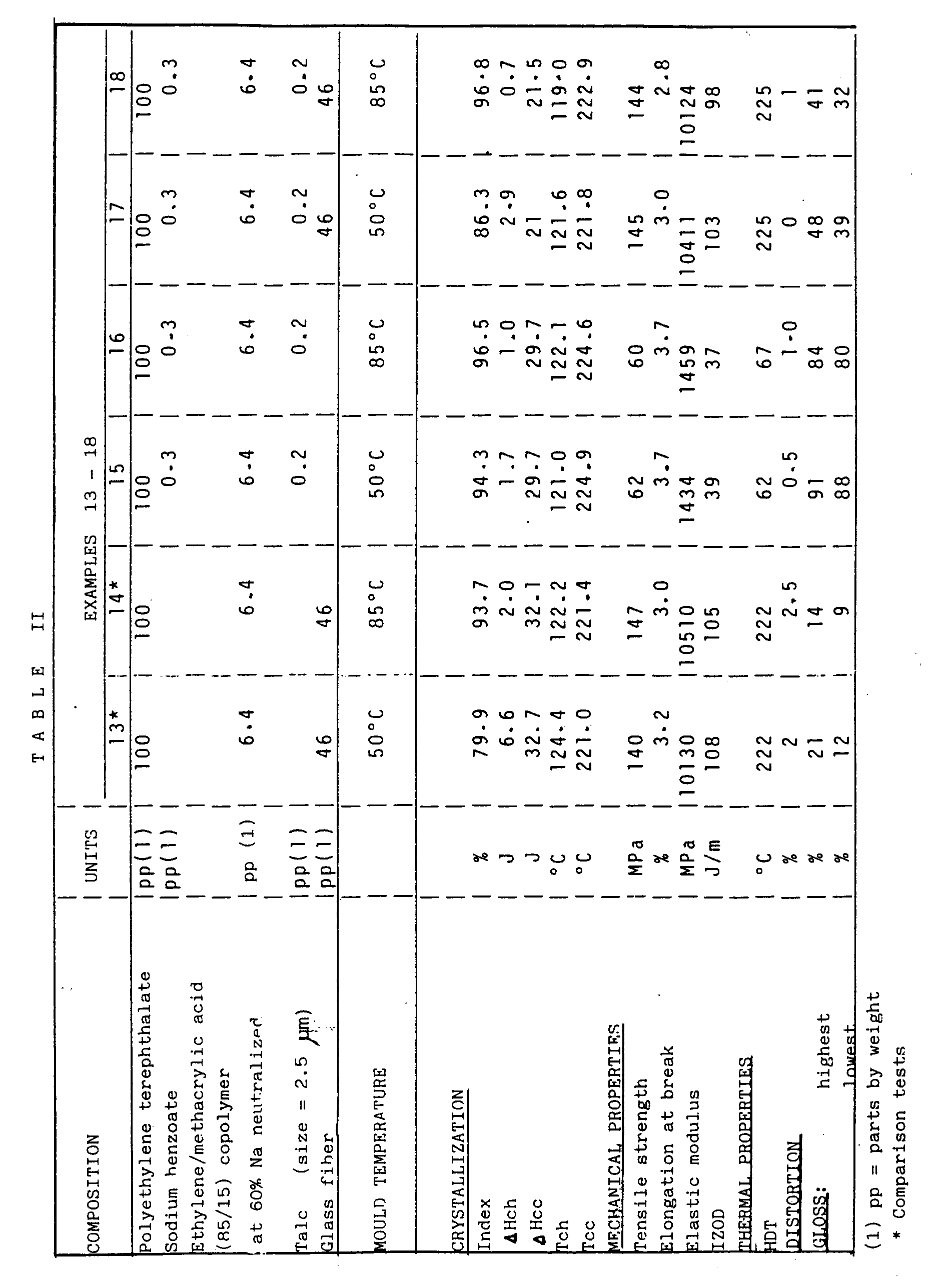

## Claims

1. Molding compositions based on polyesters with high crystallization rate and being suitable for molding at mold temperatures not higher than 100°C, comprising
(A) polyester resin;
(B) at least one salt of at least one mono- and/or polycarboxylic acid;
(C) an ionomer copolymer containing pendant carboxylic groups at least 10% of which are salified; and
(D) a solid inert inorganic substance having an average particle size not higher than 5 »m.

2. Molding compositions according to claim 1, comprising a linear saturated polyester (A);
from 0.1 to 5% by weight, with respect to polyester (A), of component (B);
from 1 to 20% by weight, with respect to polyester (A), of component (C); and
from 0.01 to 1% by weight, with respect to polyester (A), of component (D).

3. Molding compositions according to any one of claims 1 and 2, comprising:
a linear saturated polyester (A) having an intrinsic viscosity of at least 0.3 dl/g;
from 0.5 to 2% by weight, with respect to polyester (A), of at least one salt of at least one mono- and/or polycarboxylic acid containing from 7 to 25 carbon atoms; from 2 to 10% by weight, with respect to polyester (A), of component (C); and
from 0.01 to 1% by weight, with respect to polyester (A), of a solid inert inorganic substance having an average particle size not higher than 2.5 »m.

4. Molding compositions according to any one of the preceding claims, containing in addition a reinforcing material preferably selected from glass fibers, asbestos fibers, carbon fibers, crystalline aromatic polyamide fibers, high modulus acrylic fibers and mixtures thereof, in an amount of from 0.1 to 150 and, preferably, from 10 to 100% by weight, based on said molding composition.

5. Molding compositions according to claim 4, wherein the reinforcing material is composed of glass fibers having a length of from 0.05 to 5 cm and/or a diameter of from 5 to 50 »m.

6. Molding compositions according to any one of the preceding claims, wherein the (linear) saturated polyester comprises polyethylene terephthalate having an intrinsic viscosity of at least 0.3 dl/g, preferably of from 0.5 to 1.1 dl/g, and a content of diethylene glycol derived units of at least 0.5% by weight and preferably of from 0.8 to 5% by weight.

7. Molding compositions according to any one of the preceding claims, wherein the mono- and/or polycarboxylic acid of component (B) contains from 7 to 25 carbon atoms and is salified by one or more Group I and II metals.

8. Molding compositions according to claim 7, wherein the salt of said monocarboxylic acid (B) is sodium and/or potassium benzoate.

9. Molding compositions according to any one of the preceding claims, wherein said salt of a mono- and/or polycarboxylic acid (B) is in pulverized form with an average particle size of below 10 »m, preferably of from 1 to 5 »m.

10. Molding compositions according to any one of the preceding claims, wherein the ionomer component (C) is a copolymer of at least one alpha-olefin and at least one alpha-beta unsaturated carboxylic acid wherein at least 10% of the carboxylic groups are neutralized with at least one metal of Groups I to III of the Periodic Table.

11. Molding compositions according to claim 10, wherein component (C) has general formula (I): 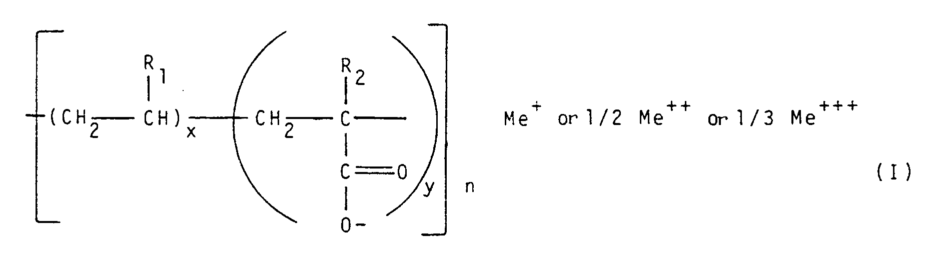 wherein:
R₁ represents hydrogen, C₁-C₁₂ alkyl or phenyl; R₂ represents hydrogen, methyl or ethyl; x, y and n are each integers; Me⁺ represents a metal ion of Group I, Me⁺⁺ a metal ion of Group II and Me⁺⁺⁺ a metal ion of Group III of the Periodic Table.

12. Molding compositions according to any one of claims 10 and 11, wherein component (C) has an average molecular weight of from 5,000 to 50,000 and/or an olefin content of at least 50, preferably of from 80 to 99% by weight, and/or at least 10, preferably at least 30% of the carboxylic groups neutralized by metal ions.

13. Molding compositions according to any one of claims 10 to 12, wherein the metal ions are selected from sodium, potassium, lithium, calcium, zinc, barium, magnesium and aluminium ions.

14. Molding compositions according to any one of claims 10 to 13, wherein the ionomer (C) is composed of ethylene and methacrylic acid units in a ratio of about 85:15, and from 50 to 85% of the acid groups are neutralized by sodium and/or potassium ions.

15. Molding compositions according to any one of the preceding claims, wherein the inert inorganic substance (D) is selected from calcium carbonate, talc, calcium sulphate, magnesium oxide, titanium dioxide, carbon black, pyrophyllite, boron nitride and mixtures thereof.

16. Molding compositions according to any one of the preceding claims, containing, in addition, from 0.01 to 5% by weight of conventional additives employed with polyester resins to improve the photo- and/or thermostability characteristics and/or other additives such as pigments, colorants, mold release agents, flame retarding agents, rubbers to impart impact resistant properties and additives which improve physical properties, such as toughness and elongation.

17. Molded articles, made of compositions according to any one of the preceding claims.

## Patentansprüche

1. Formmassen auf der Basis von Polyestern mit hoher Kristallisationsgeschwindigkeit, die für Formverfahren bei Formtemperaturen von nicht mehr als 100° C geeignet sind, die umfassen:
(A) Polyesterharz,
(B) wenigstens ein Salz von wenigstens einer Mono- und/oder Polycarbonsäure,
(C) ein Ionomer-Copolymer, das Carbonsäure-Seitengruppen enthält, von denen wenigstens 10% einer Salzbildung unterworfen sind und
(D) eine feste inerte anorganische Substanz mit einer durchschnittlichen Teilchengröße von nicht mehr als 5 »m.

2. Formmassen nach Anspruch 1, die umfassen:
einen linearen gesättigten Polyester (A),
von 0,1 bis 5 Gew.-%, bezogen auf den Polyester (A), der Komponente (B),
von 1 bis 20 Gew.-%, bezogen auf den Polyester (A), der Komponenten (C) und
von 0,01 bis 1 Gew.-%, bezogen auf den Polyester (A), der Komponenten (D).

3. Formmassen nach einem der Ansprüche 1 und 2, die umfassen:
einen linearen gesättigten Polyester (A) mit einer Grenzviskosität von wenigstens 0,3 dl/g,
von 0,5 bis 2 Gew.-%, bezogen auf den Polyester (A), wenigstens eines Salzes von wenigstens einer Mono- und/oder Polycarbonsäure mit 7 bis 25 Kohlenstoffatomen,
von 2 bis 10 Gew.-%, bezogen auf den Polyester (A), der Komponenten (C) und
von 0,01 bis 1 Gew.-%, bezogen auf den Polyester (A), einer festen inerten anorganischen Substanz mit einer durchschnittlichen Teilchengröße von nicht mehr als 2,5 »m.

4. Formmassen nach einem der vorhergehenden Ansprüche, die zusätzlich ein Verstärkungsmaterial enthalten, das vorzugsweise ausgewählt ist aus Glasfasern, Asbestfasern, Kohlenstoffasern, kristallinen aromatischen Polyamidfasern, Acrylfasern mit hohem Modul und Mischungen davon, in einer Menge von 0,1 bis 150, vorzugsweise von 10 bis 100 Gew.-%, bezogen auf die genannte Formmasse.

5. Formmassen nach Anspruch 4, worin das Verstärkungsmaterial zusammengesetzt ist aus Glasfasern mit einer Länge von 0,05 bis 5 cm und/oder einem Durchmesser von 5 bis 50 »m.

6. Formmassen nach einem der vorhergehenden Ansprüche, worin der (lineare) gesättigte Polyester Polyethylenterephthalat mit einer Grenzviskosität von wenigstens 0,3 dl/g, vorzugsweise von 0,5 bis 1,1 dl/g und einem Gehalt an von Diethylenglykol abgeleiteten Einheiten von wenigstens 0,5 Gew.-%, vorzugsweise von 0,8 bis 5 Gew.-%, umfaßt.

7. Formmassen nach einem der vorhergehenden Ansprüche, worin die Mono- und/oder Polycarbonsäure der Komponente (B) von 7 bis 25 Kohlenstoffatome enthält und mit einem oder mehreren Metallen der Gruppe I und II einer Salzbildung unterworfen ist.

8. Formmassen nach Anspruch 7, worin das Salz der genannten Monocarbonsäure (B) Natrium- und/oder Kaliumbenzoat ist.

9. Formmassen nach einem der vorhergehenden Ansprüche, worin das Salz einer Mono- und/oder Polycarbonsäure (B) in pulverisierter Form vorliegt und eine durchschnittliche Teilchengröße von unter 10 »m, vorzugsweise von 1 bis 5 »m, aufweist.

10. Formmassen nach einem der vorhergehenden Ansprüche, worin die Ionomer-Komponente (C) ein Copolymer wenigstens eines α-Olefins und wenigstens einer α-β ungesättigten Carbonsäure ist, worin wenigstens 10% der Carbonsäuregruppen mit wenigstens einem Metall der Gruppen I bis III des periodischen Systems neutralisiert sind.

11. Formmassen nach Anspruch 10, worin die Komponente (C) die allgemeinen Formel (I) hat: 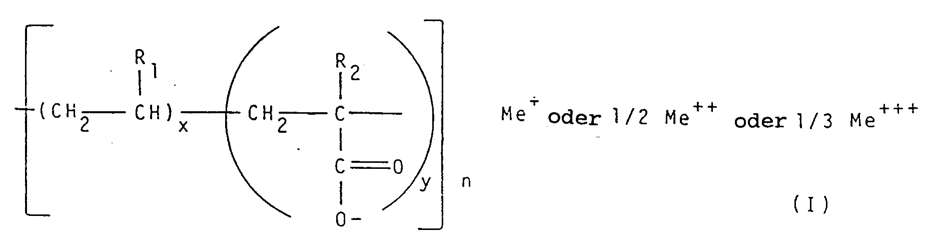 worin:
R₁ Wasserstoff, C₁-C₁₂-Alkyl oder Phenyl bedeutet; R₂ Wasserstoff, Methyl oder Ethyl ist; x, y und n jeweils ganze Zahlen sind; Me⁺ ein Metallion der Gruppe I, Me⁺⁺ ein Metallion der Gruppe II und Me⁺⁺⁺ ein Metallion der Gruppe III des periodischen Systems bedeuten.

12. Formmassen nach einem der Ansprüche 10 und 11, worin die Komponenten (C) einen Durchschnitt des Molekulargewichts von 5.000 bis 50.000 und/oder einen Olefingehalt von wenigstens 50, vorzugseise von 80 bis 99 Gew.-% aufweisen und/oder wenigstens 10, vorzugsweise wenigstens 30% der Carbonsäuregruppen durch Metallionen neutralisiert sind.

13. Formmassen nach einem der Ansprüche 10 bis 12, worin die Metallionen ausgewählt sind aus Natrium-, Kalium-, Lithium-Kalzium-, Zink-, Barium-, Magnesium- und Aluminiumionen.

14. Formmassen nach einem der Ansprüche 10 bis 13, worin das Ionomer (C) zusammengesetzt ist aus Ethylen- und Methacrylsäureeinheiten in einem Verhältnis von etwa 85:15 und von 50 bis 85% der Säuregruppen durch Natrium- und/oder Kaliumionen neutralisiert sind.

15. Formmassen nach einem der vorhergehenden Ansprüche, worin die inerte anorganische Substanz (D) ausgewählt ist aus Kalziumcarbonat, Talkum, Kalziumsulfat, Magnesiumoxid, Titandioxid, Ruß, Pyrophyllit, Bornitrid und Mischungen davon.

16. Formmassen nach einem der vorhergehenden Ansprüche, die zusätzlich von 0,01 bis 5 Gew.-% herkömmliche, mit Polyesterharzen verwendete Additive enthalten, um die Photo- und/oder Thermostabilitätseigenschaften zu verbessern, und/oder andere Additive wie Pigmente, Färbemittel, Formtrennmittel, flammhemmende Mittel, Kautschukmaterialien zur Verleihung von Schlagfestigkeitseigenschaften, und Additive, die die physikalischen Eigenschaften wie Zähigkeit und Dehnfähigkeit verbessern.

17. Formkörper, hergestellt aus den Zusammensetzungen nach einem der vorhergehenden Ansprüche.

## Revendications

1. Compositions à mouler, à base de polyesters, qui présentent un degré élevé de cristallisation et sont adaptées pour être moulées à des températures de moule ne dépassant pas 100°C, et qui comprennent :
A) une résine de polyester,
B) au moins un sel d'au moins un acide monocarboxylique et/ou polycarboxylique,
C) un copolymère ionomère comportant des groupes carboxy pendants, dont au moins 10 % sont salifiés, et
D) une substance minérale solide inerte, en particules dont la taille moyenne ne dépasse pas 5 »m.

2. Compositions à mouler, conformes à la revendication 1, qui comprennent :
un polyester saturé linéaire (A),
de 0,1 à 5 % en poids du composant (B), par rapport au polyester (A), de 1 à 20 % en poids du composant (C), par rapport au polyester (A), et de 0,01 à 1 % en poids du composant (D), par rapport au polyester (A).

3. Compositions à mouler, conformes à l'une des revendications 1 et 2, qui comprennent :
un polyester saturé linéaire (A) dont la viscosité intrinsèque vaut au moins 0,3 dl/g,
de 0,5 à 2 % en poids, par rapport au polyester (A), d'au moins un sel d'au moins un acide monocarboxylique et/ou polycarboxylique comportant de 7 à 25 atomes de carbone,
de 2 à 10 % en poids, par rapport au polyester (A), du composant (C), et de 0,01 à 1 % en poids, par rapport au polyester (A), d'une substance minérale solide inerte, en particules dont la taille moyenne ne dépasse pas 2,5 »m.

4. Compositions à mouler, conformes à l'une des revendications précédentes, qui contiennent en outre un matériau de renfort choisi de préférence parmi des fibres de verte, des fibres d'amiante, des fibres de carbone, des fibres de polyamide aromatique cristallin, des fibres acryliques à haut module et des mélanges de telles fibres, en une proportion pondérale de 0,1 à 150 %, de préférence de 10 à 100 %, par rapport à ladite composition à mouler.

5. Compositions à mouler, conformes à la revendication 4, dans lesquelles le matériau de renfort est constitué par des fibres de verte dont la longueur vaut de 0,05 à 5 cm et/ou le diamètre vaut de 5 à 50 »m.

6. Compositions à mouler, conformes à l'une des revendications précédentes, dans lesquelles le polyester saturé (linéaire) consiste en un poly(éthylène téréphtalate) dont la viscosité intrinsèque vaut au moins 0,3 dl/g, de préférence de 0,5 à 1,1 dl/g, et dont la teneur en motifs dérivés du diéthylèneglycol vaut au moins 0,5 % en poids, et de préférence de 0,8 à 5 % en poids.

7. Compositions à mouler, conformes à l'une des revendications précédentes, dans lesquelles l'acide monocarboxylique et/ou polycarboxylique du composant (B) comporte de 7 à 25 atomes de carbone et est salifié avec un ou plusieurs métaux des Groupes I et II.

8. Compositions à mouler, conformes à la revendication 7, dans lesquelles ledit sel d'acide monocarboxylique (B) est du benzoate de sodium et/ou de potassium.

9. Compositions à mouler, conformes à l'une des revendications précédentes, dans lesquelles ledit sel d'acide monocarboxylique et/ou polycarboxylique (B) se trouve sous forme d'une poudre dont les particules ont une taille moyenne inférieure à 10 »m, et de préférence, une taille moyenne de 1 à 5 »m.

10. Compositions à mouler, conformes à l'une des revendications précédentes, dans lesquelles le composant ionomère (C) est un copolymère d'au moins une α-oléfine et d'au moins un acide carboxylique α,β-insaturé, dans lequel au moins 10 % des groupes carboxy sont neutralisés avec au moins un métal des Groupes I à III du Tableau Périodique.

11. Compositions à mouler, conformes à la revendication 10, dans lesquelles le composant (C) présente la formule générale (I) : 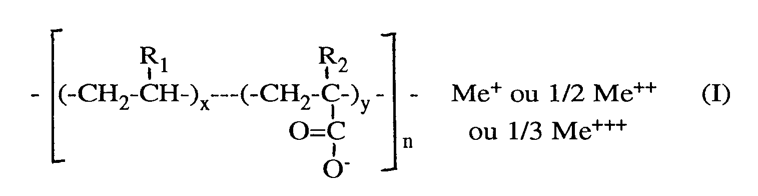 dans laquelle R₁ représente un atome d'hydrogène, un groupe alkyle en C₁₋₁₂ ou un groupe phényle, R₂ représente un atome d'hydrogène ou un groupe méthyle ou éthyle, x, y et n représentent chacun un nombre entier, Me⁺ représente un ion d'un métal du Groupe I, Me⁺⁺ représente un ion d'un métal du Groupe II et Me⁺⁺⁺ représente un ion d'un métal du Groupe III du Tableau Périodique.

12. Compositions à mouler, conformes à l'une des revendications 10 et 11, dans lesquelles la masse moléculaire moyenne du composant (C) vaut de 5000 à 50000, et/ou sa teneur en oléfine vaut au moins 50 % et de préférence de 80 à 99 % en poids, et/ou au moins 10 %, de préférence au moins 30 %, de ses groupes carboxy sont neutralisés avec des ions métalliques.

13. Compositions à mouler, conformes à l'une des revendications 10 à 12, dans lesquelles les ions métalliques sont choisis parmi les ions de sodium, potassium, lithium, calcium, zinc, baryum, magnésium et aluminium.

14. Compositions à mouler, conformes à l'une des revendications 10 à 13, dans lesquelles l'ionomère (C) est constitué de motifs dérivés de l'éthylène et de l'acide méthacrylique, en un rapport d'environ 85/15, et de 50 à 85 % des groupes acides sont neutralisés avec des ions de sodium et/ou de potassium.

15. Compositions à mouler, conformes à l'une des revendications précédentes, dans lesquelles la substance minérale inerte (D) est choisie parmi le carbonate de calcium, le talc, le sulfate de calcium, l'oxyde de magnésium, le dioxyde de titane, le noir de carbone, la pyrophyllite, le nitrure de bore et les mélanges de ces substances.

16. Compositions à mouler, conformes à l'une des revendications précédentes, qui contiennent en outre de 0,01 à 5 % en poids d'adjuvants classiques employés avec les résines de polyester pour en améliorer les caractéristiques de stabilité vis-à-vis de la lumière et/ou de la chaleur, et/ou d'autres adjuvants tels que pigments, colorants, agents de démoulage, agents ignifugeants, caoutchoucs apportant des propriétés de résistance au choc, et adjuvants améliorant certaines propriétés physiques conune la ténacité et l'allongement.

17. Pièces moulées, faites d'une composition conforme à l'une des revendications précédentes.
